# FASCICULE DE BREVET EUROPEEN

(11) **EP 2 094 481 B1**
(45) Date de publication et mention de la délivrance du brevet: **02.11.2011**
(21) Numéro de dépôt: 07858735.9
(22) Date de dépôt: 26.11.2007
(51) Int. Cl.: B32B 1/08, B32B 27/08, B32B 27/34, F16L 11/04

(54) **UTILISATION D'UNE STRUCTURE MULTICOUCHE POUR LA FABRICATION DE CONDUITES DE GAZ, NOTAMMENT DE METHANE**
VERWENDUNG EINER MEHRSCHICHTIGEN STRUKTUR ZUR HERSTELLUNG VON GASLEITUNGEN, INSBESONDERE FÜR METHAN
USE OF A MULTI-LAYERED STRUCTURE FOR THE MANUFACTURE OF GAS DUCTS, IN PARTICULAR FOR METHANE

(30) Priorité: 30.11.2006 FR 0655218; 14.12.2006 US 874934 P
(43) Date de publication de la demande: 02.09.2009
(73) Titulaire: ARKEMA FRANCE, 92700 Colombes (FR)
(72) Inventeur: BRULE, Benoît, 27170 Beaumont-le-Roger (FR); BENET, Sylvain, 92705 COLOMBES CEDEX (FR)
(74) Mandataire: Lhoste, Catherine
(86) Numéro de dépôt international: PCT/FR2007/052395
(87) Numéro de publication internationale: WO 2008/065300

(56) Documents cités:
- EP-A- 1 243 831
- EP-A- 1 306 203
- EP-A- 1 380 411
- EP-A1- 1 496 299
- WO-A-2005/102681
- WO-A-2005/102694
- WO-A-2006/066944
- FR-A1- 2 726 345

## Description

La présente invention se rapporte à une utilisation d'une structure multicouche particulière pour la fabrication de conduites de gaz, et plus particulièrement pour les conduites de méthane.
Actuellement, les conduites de gaz, notamment de méthane, sont réalisées en caoutchouc. Ces conduites, également appelées durites, présentent toutefois un certain nombre d'inconvénients parmi lesquels on peut notamment citer le coût et le poids.
On cherche donc une alternative à ces conduites en caoutchouc, qui soit non seulement intéressante du point de vue économique, mais qui réponde bien entendu aux exigences liées à l'utilisation de telles durites pour le transport de gaz.
En particulier, le critère primordial est la propriété barrière de la durite au gaz véhiculé ainsi que les critères classiquement imposés par les cahiers des charges des utilisateurs, tels que le choc à froid, la tenue thermique, la tenue raccord et la résistance au sel (ZnCl₂).
C'est dans ce contexte de recherche d'une solution alternative satisfaisante que la Demanderesse a observé que des structures multicouches thermoplastiques pouvaient très avantageusement être utilisées pour la fabrication de conduites de gaz à la place des structures élastomères actuelles.
Le document US 2002/036405 au nom du Demandeur propose une structure multicouche thermoplastique pour le transport de gaz. Cette structure comprend au moins une couche constituée essentiellement de polyéthylène (qui s'entend comme homopolymère ou copolymère de l'éthylène) et une couche extérieure en polyamide.
Si une telle structure s'avère satisfaisante du point de vue de certaines des propriétés mécaniques (tenue aux chocs, résistance à la pression d'éclatement, enroulabilité), elle présente une faible tenue au raccord et, de surcroît, une résistance thermique qui peut être insuffisante dans certaines applications du fait de la présence d'au moins une couche constituée essentiellement de polyéthylène.
L'invention se rapporte donc à l'utilisation d'une structure multicouche pour la fabrication de conduites de gaz, notamment de gaz naturel, cette structure palliant les inconvénients des structures élastomères et des structures thermoplastiques enseignées par le document US 2002/036405, et présentant, entre autres et simultanément, de bonnes propriétés barrières au gaz véhiculé et de résistance thermique.
L'invention se rapporte en particulier à l'utilisation d'une structure multicouche pour la fabrication de conduites de méthane.
Selon l'invention, cette utilisation met en oeuvre une structure multicouche comprenant, de l'extérieur vers l'intérieur, les couches successives suivantes, ces couches adhérant à leur zone de contact respective :
- une couche 1 comprenant au moins un polyamide, le polyamide étant choisi parmi le PA 11, le PA 12 et un polyamide aliphatique résultant de la condensation d'une diamine aliphatique ayant de 6 à 18 atomes de carbone et d'un diacide aliphatique ayant de 9 à 18 atomes de carbone,
- de manière optionnelle, une couche 2 de liant, et
- une couche 3 choisie parmi une couche d'EVOH, une couche formée d'un mélange de polyamide et d'une polyoléfine à matrice polyamide et une couche de PA 6, PA 6-6, MXD.6 ou MXD.10, la couche 3 étant destinée à être en contact avec le gaz véhiculé.
Les structures mises en oeuvre dans le cadre de l'utilisation selon la présente invention sont hautement barrière aux gaz, tels que le méthane.

Dans le cas particulier du méthane, on considère que l'on a de bonnes propriétés barrières lorsque la perméabilité, mesurée à 23°C, est inférieure à 5 cm³.mm/m².24h.atm.
De telles structures sont de surcroît hautement barrière tout en ne pouvant faire intervenir qu'un nombre restreint de couches. Ainsi, des structures constituées de 2 couches ou 3 couches, dans le cas où la présence d'une couche de liant s'avérerait nécessaire pour assurer l'adhérence des couches 1 et 3, sont tout à fait envisageables.
En outre, de telles structures présentent également l'avantage de pouvoir être coextrudées sur des outils couramment utilisés dans le domaine des thermoplastiques.
En particulier, dans le cas d'une utilisation de ces structures multicouches dans le domaine de l'automobile, les équipementiers mettront en oeuvre, pour la fabrication des conduites de gaz, les mêmes outils que ceux qu'ils utilisent couramment pour la fabrication de structures multicouches destinées, par exemple, à l'alimentation en essence.
En outre, compte tenu du caractère multicouche de ces structures, on peut aisément adapter les performances des conduites en fonction des applications particulières recherchées et de l'environnement dans lequel sont intégrées les conduites de gaz.
Les structures multicouches utilisées ne comportent aucune couche constituée de polyéthylène telle que celle décrite dans le document US 2002/036405.

La description qui va suivre détaille les compositions des différentes couches constituant les structures multicouches répondant à l'utilisation faisant l'objet de la présente invention.

Selon un premier aspect de l'invention, la structure multicouche utilisée pour la fabrication des conduites de gaz est formée de deux ou trois couches successives, la couche 1, la couche 2 qui est optionnelle et la couche 3, la couche 3 étant destinée à être en contact avec le gaz véhiculé par la conduite.

### Couche 1

La couche 1 comprend au moins un polyamide, le polyamide étant choisi parmi le PA 11, le PA 12 et un polyamide aliphatique résultant de la condensation d'une diamine aliphatique ayant de 6 à 18 atomes de carbone et d'un diacide aliphatique ayant de 9 à 18 atomes de carbone.
A titre d'exemples de polyamides aliphatiques, on pourra se référer aux produits cités par le document US 2005/0031818 A1, notamment aux paragraphes [0042] à [0047].
En particulier, on peut utiliser, dans la composition de la couche 1, le PA 6-12, le PA 9-12, le PA 10-10 ou encore le PA 10-12.
Le PA 11, le PA 12 ou le polyamide aliphatique de la couche 1 peut en outre comporter au moins un additif choisi parmi les plastifiants, les modifiants chocs, les colorants, les pigments, les azurants, les anti-oxydants, les stabilisants UV et les polyoléfines, ces dernières pouvant être fonctionnalisées ou non.
Un plastifiant usuel est le n-butyl benzène sulfonamide (BBSA). Mais d'autres plastifiants, tels que ceux cités au paragraphe [0052] du document US 2005/0031818 A1, pourraient également être utilisés.

### Couche 2

La couche 2 est une couche de liant qui permet l'adhérence des différentes couches entre elles pour éviter tout phénomène de délamination.
Dans la structure multicouche mise en oeuvre dans le cadre de l'utilisation selon l'invention, la couche 2 doit parfaitement adhérer aux couches 1 et 3.
Comme largement décrit dans l'art antérieur, notamment dans les paragraphes [0068] à [0093] du document US 2005/0031818 A1, le liant est de manière classique une polyoléfine fonctionnalisée, la fonctionnalisation de la polyoléfine étant assurée par un acide carboxylique ou un anhydride d'acide carboxylique, greffé ou copolymérisé. Cette polyoléfine fonctionnalisée peut être mélangée avec une polyoléfine non fonctionnalisée.
Le liant peut également être un copolyamide ou un mélange de copolyamides.
Des compositions à base de copolyamide qui conviennent à la structure multicouche selon la présente invention sont également décrites dans le document US 2005/0031818 A1 (paragraphes [0094] à [0111]) ainsi que dans le document US 7,063,873 (col. 5, I. 3 à col. 6, I. 50).
Le liant peut en outre comprendre au moins un additif choisi parmi les plastifiants, les modifiants chocs, les colorants, les pigments, les azurants, les anti-oxydants, les stabilisants UV et les polyoléfines, ces dernières pouvant être fonctionnalisées ou non.
Par exemple, le liant peut comprendre un modifiant choc choisi parmi les élastomères et les polyéthylènes de très basse densité, ce modifiant choc étant en tout ou partie fonctionnalisé. On se référera au document WO 2006/066944 A1 qui décrit de manière détaillée des modifiants chocs convenant dans le cadre de la présente invention.
Cette couche 2 est toutefois optionnelle. En effet, dans un souci de limitation des coûts, on n'intercalera pas cette couche 2 entre les couches 1 et 3, dans le cas particulier où les compositions des couches 1 et 3 adhéreraient bien entre elles.

### Couche 3

On peut envisager différentes compositions pour la couche 3, toutes ces compositions permettant l'utilisation de la structure multicouche pour la fabrication de conduites de gaz.
La couche 3 est choisie parmi une couche d'EVOH, une couche formée d'un mélange de polyamide et d'une polyoléfine à matrice polyamide et une couche de PA 6, PA 6-6, MXD.6 ou MXD.10.

La couche 3 peut être une couche d'EVOH, l'EVOH étant un copolymère éthylène-acétate de vinyle saponifié.
Par couche d'EVOH, on entend aussi bien une couche constituée d'EVOH, qu'une couche formée d'un mélange comprenant au moins 40% en poids d'EVOH, les autres constituants du mélange étant alors choisis parmi les polyoléfines, les polyamides et éventuellement des polymères fonctionnels.
Des compositions à base d'EVOH convenant pour les structures multicouches utilisées dans le cadre de la présente invention ont été notamment décrites dans le document US 7,063,873 (col. 7, I. 18 à col. 8, I. 11).
La couche 3 peut également être formée par un mélange de polyamide (A) et de polyoléfine (B) à matrice polyamide.
On entend par polyamide (A), les produits de condensation :
- d'un ou plusieurs aminoacides,
- d'un ou plusieurs lactames, ou
- d'un ou plusieurs sels ou mélanges de diamines et diacides.
On peut aussi utiliser avantageusement des copolyamides, tels que ceux résultant de la condensation:
- d'au moins deux acides alpha oméga aminocarboxyliques,
- de deux lactames,
- d'un lactame et d'un acide alpha oméga aminocarboxylique,
- d'au moins un acide alpha oméga aminocarboxylique, au moins une diamine et au moins un diacide, ou encore
- d'au moins un lactame, au moins une diamine et au moins un diacide.
On se référera au document US 2005/0031818 A1, en particulier aux paragraphes [0112] à [0123] qui décrivent de manière détaillée des exemples d'aminoacides, de lactames, de diamines, de diacides ou d'acides alpha oméga aminocarboxyliques.

De manière avantageuse mais non limitative, le polyamide peut être choisi parmi le PA 6 et le PA 6-6 ; le copolyamide peut être choisi parmi le PA 6/12, le PA 6/6-6, le PA 6/12/6-6, le PA 6/6-9/11/12, le PA 6/6-6/11/12 et le PA 6-9/12.
On peut également utiliser des mélanges de polyamides et/ou de copolyamides.
On entend par polyoléfine (B), une polyoléfine fonctionnalisée (B1), une polyoléfine non fonctionnalisée (B2) ou un mélange d'au moins une polyoléfine fonctionnalisée (B1) et/ou d'au moins une polyoléfine non fonctionnalisée (B2).
Une polyoléfine non fonctionnalisée (B2) est classiquement un homopolymère ou un copolymère d'alpha oléfines ou de dioléfines.
Une polyoléfine fonctionnalisée (B1) est de manière générale un homopolymère ou un copolymère d'alpha oléfines ayant des motifs réactifs (les fonctionnalités), ces motifs réactifs étant des fonctions acides, anhydrides ou époxys.
Des polyoléfines fonctionnalisées (B1) et des polyoléfines non fonctionnalisées (B2) convenant pour une composition de couche 3 comprenant un polyamide (A) et une polyoléfine (B) à matrice polyamide sont très largement décrites dans le document US 2005/0031818 A1, en particulier aux paragraphes [0124] à [0205].
A titre d'exemples de polyoléfines fonctionnalisées, on peut citer les terpolymères de l'éthylène, d'acrylate d'alkyle et d'anhydride maléique ou de méthacrylate de glycidyle, comme les Lotader^{®}, ou les polyoléfines greffées par de l'anhydride maléique, comme les Orevac^{®}, ces produits étant commercialisés par de la Demanderesse.
La couche 3 peut également être en PA 6 ou en PA 6-6.
La couche 3 peut encore être en MXD.6 ou en MXD.10.

De tels polyamides semi-aromatiques ont été notamment décrits dans les documents GB 1490453, US 2,766,221 et plus récemment dans le document WO 2006/108721 A1.

Selon un deuxième aspect de l'invention, la structure multicouche utilisée pour la fabrication des conduites de gaz est formée de trois ou quatre couches successives, la couche 1, la couche 2 optionnelle, la couche 3 et la couche 5, la couche 5 étant en contact avec le gaz véhiculé par la conduite.

### Couches 1 à 3

La composition de chacune des couches 1 à 3 est identique à celle décrite ci-dessus pour le premier aspect de l'invention.

### Couche 5

La couche 5 est une couche à base de polyamide.
La couche 5 peut notamment comprendre au moins un polyamide, le polyamide étant choisi parmi le PA 11, le PA 12 et un polyamide aliphatique résultant de la condensation d'une diamine aliphatique ayant de 6 à 18 atomes de carbone et d'un diacide aliphatique ayant de 9 à 18 atomes de carbone.
La couche 5 peut comprendre en outre une polyoléfine fonctionnalisée et/ou une polyoléfine non fonctionnalisée
On se reportera à la description des polyoléfines fonctionnalisées (B1) et non fonctionnalisées (B2) faite ci-dessus.
La couche 5 peut également comprendre un ou plusieurs additifs, en particulier ceux déjà mentionnés auparavant pour la couche 1.
De préférence, dans une même structure multicouche, la composition à base de polyamide de la couche 5 est identique à celle décrite ci-dessus pour la composition de la couche 1.

Selon un troisième aspect de l'invention, la structure multicouche utilisée pour la fabrication des conduites de gaz est formée de trois, quatre ou cinq couches successives, la couche 1, la couche 2 optionnelle, la couche 3, la couche 4 optionnelle et la couche 5, la couche 5 étant en contact avec le gaz véhiculé par la conduite.

### Couches 1 à 3 et 5

La composition de chacune des couches 1 à 3 est identique à celle décrite ci-dessus pour le premier aspect de l'invention.
Pour la composition de la couche 5, on se reportera à ce qui a déjà été décrit pour le deuxième aspect de l'invention concernant la couche 5.

### Couche 4

Comme la couche 2 précédemment décrite, la couche 4 est optionnelle.

Cette couche 4 est une couche de liant intercalée entre les couches 3 et 5 pour permettre ou optimiser l'adhérence de ces couches 3 et 5 entre elles, et ainsi éviter tout phénomène de délamination.
On se reportera à ce qui a été précédemment décrit pour la couche 2 pour connaître les compositions susceptibles d'être mises en oeuvre pour la couche 4 de liant.
Dans une version avantageuse, dans une même structure multicouche, la composition à base de polyamide de la couche 5 est identique à celle décrite ci-dessus pour la composition de la couche 1.
Dans une version particulièrement avantageuse de l'invention, les compositions des couches 2 et 4, d'une part, et des couches 1 et 5, d'autre part, d'une même structure multicouche sont identiques.

La structure multicouche mise en oeuvre dans le cadre de la présente invention, qu'elle comprenne deux, trois, quatre ou cinq couches, peut en outre comporter une couche 1' de protection, disposée sur la couche 1.
Cette couche 1' de protection peut être une couche de protection contre la chaleur, une couche ignifuge, une couche résistante à l'abrasion, une couche résistante à l'oxydation ou encore une couche ayant simultanément plusieurs de ces propriétés.

La structure multicouche décrite ci-dessus est avantageusement mise en forme de manière à se présenter sous la forme d'un corps creux, de préférence sous la forme d'un tube ou d'un tuyau.
En particulier, les tubes sont fabriqués par la technique de coextrusion, d'où la nécessité d'avoir une parfaite adhérence entre les différentes couches coextrudées formant la structure.
Lorsque la structure multicouche est un tube, on peut conformer ce tube de manière à obtenir un tube lisse ou, au contraire, un tube annelé.

La présente invention va maintenant être illustrée par différents exemples pour lesquels la perméabilité au méthane a été mesurée, à 23°C.
Les produits mis en oeuvre sont les suivants :
- PA11 : PA11 de référence Besn TL
- PA11p : PA11 de référence Besno P40 TL additionné d'un plastifiant (BBSA)
- Liant : Platamid®1 (50%) et Platamid®2 (50%), le Platamid®1 étant un copolyamide 6/12 (40/60) et le Platamid®2 étant un copolyamide 6/12 (70/30), de référence HX 2560T
- Orgalloy : mélange de PA 6 majoritaire, de polyéthylène haute densité et d'un compatibilisant contenant une fonctionnalité anhydride de référence 18501 N, ce mélange portant la référence LE60THM.

L'ensemble des produits énumérés ci-dessus est commercialisé par la société ARKEMA FRANCE.
Les structures multicouches suivantes ont été coextrudées sous forme de tubes 6*8 (mm), les épaisseurs en µm de chacune des couches étant indiquées entre parenthèses :
PA11 (1000)
PA11p (1000)
PA11 / liant / Orgalloy (450/100/450)
PA11p / liant / Orgalloy (450/100/450)
PA11 / liant / Orgalloy / liant / PA11 (400/50/100/50/400)
PA11p / liant / Orgalloy / liant / PA11p (400/50/100/50/400)
PA11 / liant / EVOH / liant / PA11 (400/50/100/50/400)
PA11p / liant / EVOH / liant / PA11p (400/50/100/50/400)

La perméabilité au méthane de chacune de ces structures a été mesurée et donne les résultats suivants :

| | Perméabilité méthane (cm³.mm/m².24h.atm), 23°C |
|---|---|
| PA11 | 5 |
| PA11p | 13 |
| PA11 / liant / Orgalloy | 1 |
| PA11p / liant / Orgalloy | 1 |
| PA11 / liant / Orgalloy / liant / PA11 | 4 |
| PA11p / liant / Orgalloy / liant / PA11p | 4 |
| PA11 / liant / EVOH / liant / PA11 | <0.2 |
| PA11p / liant / EVOH / liant / PA11p | <0.2 |

On observe donc que les structures mises en oeuvre dans le cadre de l'utilisation conforme à la présente invention donnent d'excellents résultats en termes de propriétés barrières au méthane, la perméabilité mesurée étant bien inférieure à 5 cm³.mm/m².24h.atm.

## Revendications

1. Utilisation d'une structure multicouche comprenant, de l'extérieur vers l'intérieur, les couches successives suivantes :
- une couche 1 comprenant au moins un polyamide, le polyamide étant choisi parmi le PA 11, le PA 12 et un polyamide aliphatique résultant de la condensation d'une diamine aliphatique ayant de 6 à 18 atomes de carbone et d'un diacide aliphatique ayant de 9 à 18 atomes de carbone,
- de manière optionnelle, une couche 2 de liant, et
- une couche 3 choisie parmi une couche d'EVOH, une couche formée d'un mélange de polyamide et d'une polyoléfine à matrice polyamide et une couche de PA 6, PA 6-6, MXD.6 ou MXD.1 0,
ladite structure multicouche ne comportant en outre aucune couche constituée de polyéthylène, pour la fabrication de conduites de gaz, en particulier de conduites de méthane, la couche 3 étant destinée à être en contact avec le gaz véhiculé.

2. Utilisation selon la revendication 2, **caractérisée en ce que** le polyamide aliphatique de la couche 1 est le PA 6-12, le PA 9-12, le PA 10-10 ou le PA 10-12.

3. Utilisation selon la revendication 1 ou 2, **caractérisée en ce que** la couche 1 comprend en outre au moins un additif choisi parmi les plastifiants, les modifiants chocs, les polyoléfines fonctionnalisées ou non fonctionnalisées, les colorants, les pigments, les azurants, les anti-oxydants et les stabilisants UV.

4. Utilisation selon l'une quelconque des revendications 1 à 3, **caractérisée en ce que** le liant de la couche 2 est choisi parmi un copolyamide, un mélange de copolyamides et une polyoléfine fonctionnalisée, la fonctionnalisation de la polyoléfine étant assurée par un acide carboxylique ou un anhydride d'acide carboxylique, greffé ou copolymérisé, cette polyoléfine fonctionnalisée étant éventuellement en mélange avec une polyoléfine non fonctionnalisée.

5. Utilisation selon l'une quelconque des revendications 1 à 4, **caractérisée en ce que**, lorsque la couche 3 est formée d'un mélange de polyamide et d'une polyoléfine à matrice polyamide, le polyamide est choisi parmi le PA 6, le PA 6-6, le PA 6/12, le PA 6/6-6, le PA 6/12/6-6, le PA 6/6-9/11/12, le PA 6/6-6/11 /12 et le PA 6-9/12.

6. Utilisation selon l'une quelconque des revendications 1 à 5, **caractérisée en ce que** la couche 3 est revêtue par la ou les couches successives suivantes :
- de manière optionnelle, une couche 4 de liant, et
- une couche 5 à base de polyamide, la couche 5 étant en contact avec le gaz véhiculé.

7. Utilisation selon la revendication 6, **caractérisée en ce que** la couche 5 comprend au moins un polyamide, le polyamide étant choisi parmi le PA 11, le PA 12 et un polyamide aliphatique résultant de la condensation d'une diamine aliphatique ayant de 6 à 18 atomes de carbone et d'un diacide aliphatique ayant de 9 à 18 atomes de carbone.

8. Utilisation selon la revendication 6 ou 7, **caractérisée en ce que** la couche 5 comprend en outre une polyoléfine fonctionnalisée et/ou une polyoléfine non fonctionnalisée.

9. Utilisation selon l'une quelconque des revendications 6 à 8, **caractérisée en ce que** les compositions des couches 1 et 5 sont identiques.

10. Utilisation selon la revendication 9, **caractérisée en ce que** les compositions des couches 2 et 4 sont identiques.

11. Utilisation selon l'une quelconque des revendications 1 à 10, **caractérisée en ce que** la structure multicouche comprend en outre une couche 1' de protection, disposée sur la couche 1.

12. Utilisation selon l'une quelconque des revendications 1 à 11, **caractérisée en ce que** la structure multicouche est un tube.

13. Utilisation selon la revendication 12, **caractérisé en ce que** le tube est lisse.

14. Utilisation selon la revendication 12, **caractérisé en ce que** le tube est annelé.

## Claims

1. Use of a multilayer structure comprising, from the outside towards the inside, the following successive layers:
- a layer 1 comprising at least one polyamide, the polyamide being chosen from PA-11, PA-12 and an aliphatic polyamide resulting from the condensation of an aliphatic diamine having from 6 to 18 carbon atoms and an aliphatic diacid having from 9 to 18 carbon atoms;
- optionally, a tie layer 2; and
- a layer 3 chosen from an EVOH layer, a layer formed from a blend of polyamide and a polyolefin with a polyamide matrix, and a PA-6 or PA-6,6, MXD-6 or MXD-10 layer,
said multilayer structure not additionally comprising any layer consisting of polyethylene, for manufacturing gas ducts, in particular methane ducts, the layer 3 being intended to be in contact with the gas transported.

2. Use according to Claim 2, **characterized in that** the aliphatic polyamide of layer 1 is PA-6,12, PA-9,12, PA-10,10 or PA-10,12.

3. Use according to Claim 1 or 2, **characterized in that** the layer 1 in addition comprises at least one additive chosen from plasticizers, impact modifiers, functionalized or unfunctionalized polyolefins, dyes, pigments, brighteners, antioxidants and UV stabilizers.

4. Use according to any one of Claims 1 to 3, **characterized in that** the tie of layer 2 is chosen from a copolyamide, a blend of copolyamides and a functionalized polyolefin, the functionalization of the polyolefin being provided by a grafted or copolymerized carboxylic acid or carboxylic acid anhydride, this functionalized polyolefin optionally being a blend with an unfunctionalized polyolefin.

5. Use according to any one of Claims 1 to 4, **characterized in that**, when the layer 3 is formed from a blend of polyamide and a polyolefin with a polyamide matrix, the polyamide is chosen from PA-6, PA-6,6, PA-6/12, PA-6/6,6, PA-6/12/6,6, PA-6/6,9/11 /12, PA-6/6,6/11/12 and PA-6,9/12.

6. Use according to any one of Claims 1 to 5, **characterized in that** the layer 3 is coated by the following successive layer(s):
- optionally, a tie layer 4; and
- a polyamide-based layer 5, the layer 5 being in contact with the gas transported.

7. Use according to Claim 6, **characterized in that** the layer 5 comprises at least one polyamide, the polyamide being chosen from PA-11, PA-12 and an aliphatic polyamide resulting from the condensation of an aliphatic diamine having from 6 to 18 carbon atoms and an aliphatic diacid having from 9 to 18 carbon atoms.

8. Use according to Claim 6 or 7, **characterized in that** the layer 5 in addition comprises a functionalized polyolefin and/or an unfunctionalized polyolefin.

9. Use according to any one of Claims 6 to 8, **characterized in that** the compositions of layers 1 and 5 are identical.

10. Use according to Claim 9, **characterized in that** the compositions of layers 2 and 4 are identical.

11. Use according to any one of Claims 1 to 10, **characterized in that** the multilayer structure in addition comprises a protective layer 1', placed on the layer 1.

12. Use according to any one of Claims 1 to 11, **characterized in that** the multilayer structure is a tube.

13. Use according to Claim 12, **characterized in that** the tube is smooth.

14. Use according to Claim 12, **characterized in that** the tube is ringed.

## Patentansprüche

1. Verwendung einer Mehrschichtstruktur, die von außen nach innen die folgenden aufeinanderfolgenden Schichten umfasst:
- eine Schicht 1, die mindestens ein Polyamid umfasst, wobei das Polyamid unter PA-11, PA-12 und einem aliphatischen Polyamid, das sich aus der Kondensation eines aliphatischen Diamins mit 6 bis 18 Kohlenstoffatomen und einer aliphatischen Disäure mit 9 bis 18 Kohlenstoffatomen ergibt, ausgewählt ist,
- gegebenenfalls eine Bindemittelschicht 2 und
- eine Schicht 3, ausgewählt unter einer EVOH-Schicht, einer Schicht aus einer Mischung von Polyamid und einem Polyolefin mit Polyamidmatrix und einer PA-6-, PA-6,6-, MXD-6- oder MXD-10-Schicht,
wobei die Mehrschichtstruktur keine weitere Schicht aus Polyethylen enthält, zur Herstellung von Gasleitungen, insbesondere Methanleitungen, wobei die Schicht 3 dazu bestimmt ist, mit dem transportierten Gas in Berührung zu stehen.

2. Verwendung nach Anspruch 1, **dadurch gekennzeichnet, dass** es sich bei dem aliphatischen Polyamid der Schicht 1 um PA-6,12, PA-9,12, PA-10,10 oder PA-10,12 handelt.

3. Verwendung nach Anspruch 1 oder 2, **dadurch gekennzeichnet, dass** die Schicht 1 außerdem mindestens ein unter Weichmachern, Schlagzähigkeitsmodifikatoren, funktionalisierten oder nichtfunktionalisierten Polyolefinen, Farbmitteln, Pigmenten, Aufhellern, Antioxidantien und UV-Stabilisatoren ausgewähltes Additiv umfasst.

4. Verwendung nach einem der Ansprüche 1 bis 3, **dadurch gekennzeichnet, dass** das Bindemittel der Schicht 2 unter einem Copolyamid, einer Mischung von Copolyamiden und einem funktionalisierten Polyolefin ausgewählt ist, wobei die Funktionalisierung des Polyolefins durch eine aufgepfropfte oder copolymerisierte Carbonsäure oder ein aufgepfropftes oder copolymerisiertes Carbonsäureanhydrid gewährleistet ist, wobei dieses funktionalisierte Polyolefin gegebenenfalls in Abmischung mit einem nichtfunktionalisierten Polyolefin vorliegt.

5. Verwendung nach einem der Ansprüche 1 bis 4, **dadurch gekennzeichnet, dass** dann, wenn die Schicht 3 aus einer Mischung von Polyamid und einem Polyolefin mit Polyamidmatrix besteht, das Polyamid unter PA-6, PA-6,6, PA-6/12, PA-6/6,6, PA-6/12/6,6, PA-6/6,9/11/12, PA-6/6,6/11/12 und PA-6,9/12 ausgewählt ist.

6. Verwendung nach einem der Ansprüche 1 bis 5, **dadurch gekennzeichnet, dass** die Schicht 3 mit den folgenden aufeinanderfolgenden Schichten überzogen ist:
- gegebenenfalls einer Bindemittelschicht 4 und
- einer Schicht 5 auf Basis von Polyamid, wobei die Schicht 5 mit dem transportierten Gas in Berührung steht.

7. Verwendung nach Anspruch 6, **dadurch gekennzeichnet, dass** die Schicht 5 mindestens ein Polyamid umfasst, wobei das Polyamid unter PA-11, PA-12 und einem aliphatischen Polyamid, das sich aus der Kondensation eines aliphatischen Diamins mit 6 bis 18 Kohlenstoffatomen und einer aliphatischen Disäure mit 9 bis 18 Kohlenstoffatomen ergibt, ausgewählt ist.

8. Verwendung nach Anspruch 6 oder 7, **dadurch gekennzeichnet, dass** die Schicht 5 außerdem ein funktionalisiertes Polyolefin und/oder ein nichtfunktionalisiertes Polyolefin umfasst.

9. Verwendung nach einem der Ansprüche 6 bis 8, **dadurch gekennzeichnet, dass** die Zusammensetzungen der Schichten 1 und 5 identisch sind.

10. Verwendung nach Anspruch 9, **dadurch gekennzeichnet, dass** die Zusammensetzungen der Schichten 2 und 4 identisch sind.

11. Verwendung nach einem der Ansprüche 1 bis 10, **dadurch gekennzeichnet, dass** die Mehrschichtstruktur außerdem eine auf der Schicht 1 angeordnete Schutzschicht 1' umfasst.

12. Verwendung nach einem der Ansprüche 1 bis 11, **dadurch gekennzeichnet, dass** es sich bei der Mehrschichtstruktur um einen Schlauch handelt.

13. Verwendung nach Anspruch 12, **dadurch gekennzeichnet, dass** der Schlauch glatt ist.

14. Verwendung nach Anspruch 12, **dadurch gekennzeichnet, dass** der Schlauch geringelt ist.
